(19) Europäisches Patentamt
European Patent Office
Office européen des brevets

(11) Publication number: 0 382 439 A1

(12) # EUROPEAN PATENT APPLICATION

(21) Application number: 90301160.9

(51) Int. Cl.[5]: C08J 5/22, B01D 61/44

(22) Date of filing: 05.02.90

(30) Priority: 08.02.89 GB 8902760

(43) Date of publication of application: 16.08.90 Bulletin 90/33

(84) Designated Contracting States: AT BE CH DE DK ES FR GB GR IT LI LU NL SE

(71) Applicant: IMPERIAL CHEMICAL INDUSTRIES PLC
Imperial Chemical House, Millbank
London SW1P 3JF(GB)

(72) Inventor: Scott, Graham Wilfred
Rosedale, Jack Lane
Moulton, Northwich Cheshire, CW9 8QA(GB)
Inventor: Taylor, Thomas Mark Cavell
29 Heathfields Close
Chester CH2 2AT(GB)
Inventor: Gough, Paul
23 Duncan Avenue
Runcorn, WA7 5DY(GB)

(74) Representative: Thomas, Ieuan et al
Imperial Chemical Industries PLC, Legal
Department: Patents, PO Box 6, Bessemer
Road
Welwyn Garden City, Herts, AL7 1HD(GB)

(54) ## Anion exchange membranes.

(57) Anion exchange membranes (6) which are derived from aryl ether polymers wherein, at least a portion of the aromatic rings are bound into the polymer backbone by two ether linkages and which bear a defined sulphonamide substituent are more chemically stable than conventional anion exchange membranes and may be used in electrodialysis systems.

Fig. 1

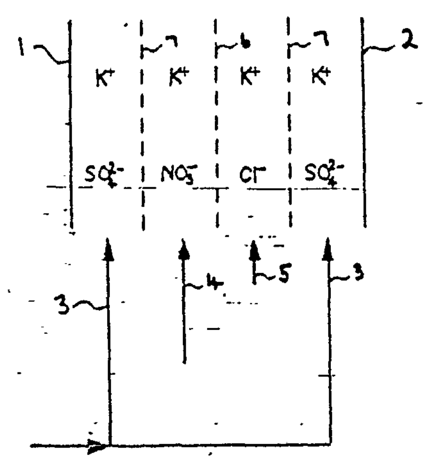


EP 0 382 439 A1

# ANION EXCHANGE MEMBRANES

The present invention relates to anion exchange membranes and to electrodialysis systems and processes using such membranes.

Electrodialysis is used to separate electrolytes from an aqueous medium, typically water.Typically, the aim is the removal of an electrolyte from a solvent to purify the solvent, e.g. desalination of brackish water, industrial effluent or foodstuffs. However, it is also used where the aim is concentration and purification of the electrolyte, e.g. sodium chloride from brine.

Conventional membranes used in electrodialysis tend to be cross-linked products, e.g. derived from polystyrene, which tend to suffer certain disadvantages, e.g. poor heat stability. Recently in EP 0,153,713 it has been suggested that certain thermoplastic polymers in which an ionic group is bonded to the polymer backbone via an alkylene chain of at least 4 carbon atoms (and introduced via a Friedel-Crafts reaction) may be used in electrodialysis systems. However, it has been suggested therein that such thermoplastic membranes require lamination to a fibre fabric to acquire acceptable tensile strength. Furthermore, such thermoplastic membranes suffer from certain disadvantages, eg high water up-take and multi-stage chemical synthesis.

We have now devised membranes useful in electrodialysis which overcome many of the aforementioned disadvantages. Furthermore, they have the surprising advantages compared with the above conventional cross-linked membranes that they are more stable to acids, alkalis and oxidising agents, eg dichromate and chlorine.

According to a first aspect of the present invention there is provided an anion-exchange membrane comprising an arylether polymer as hereinafter defined at least a portion of which aryl rings bear a cationic substituent of general formula

$-SO_2N(R^1)\text{-}G\text{-}N^+R^2_3$ I

Wherein $R^1$ is hydrogen, hydrocarbyl or $-G\ N^+R^2_3$;

$R^2$, each of which may be the same as or different from each other, is hydrogen or hydrocarbyl;

G is a direct link, alkylene, arylene or a chain of carbon atoms which chain may contain one or preferably more in-chain oxygen atoms.

Preferably $R^1$ is hydrogen or an alkyl group bearing a hydrophilic substituent, eg $(CH_2)_mOH$, where m is typically about 2.

$R^2$ is preferably a lower alkyl group containing upto 5 carbon atoms and more preferably is methyl.

Where G is an alkylene link it preferably contains less than 4 carbon atoms.

We do not exclude the possibility that two or three $R^2$ groups may be joined to form a ring, e.g. pyrrolidine, piperidine or quinuclidine, although this is not preferred.

Where $R^1$ and at least one group $R^2$ are alkyl, alkenyl or aryl these groups may be joined to form a ring, e.g. 1,4-piperazine or an amino-substituted nitrogen heterocycle, although this is not preferred.

The anion exchange membrane according to the first aspect of the present invention, in combination with an appropriate cation exchange membrane, is useful in electrodialysis, ie as one component of a cell-pair useful in electrodialysis or so-called electrodialysis reversal. Electrodialysis systems and processes are more fully described in R.M. Ahlgren in Proceedings of Ion Exchange for Pollution Control, 1979, Vol, at pp 145-57 published by CRG, Boca Raton, Florida, USA. The disclosure in which reference is incorporated herein by way of reference.

It will be appreciated that the polymer of which the anion exchange membrane of the first aspect of the present invention is comprised bears pendant cationic groups and that anions are associated with the dependant cationic groups such that overall electrical neutrality is obtained. The aforementioned anions can be, for example, any one of the common strong acid anions such as halide, sulphate, nitrate, hydrogen phosphate or organic sulphonate or a weak acid anion such as carboxylate, carbonate, sulphide or sulphite.

A membrane which comprises a thin film of polymer bearing postively charged substituents, typically quaternary ammonium groups, which selectively allow the passage of anions therethrough, in preference to cations, as the result of the passage of an electric current is herein referred to for convenience as an "anion exchange membrane"

The polymer of which the anion exchange membrane is comprised has a backbone which substantially comprises in-chain aromatic rings. Whereas we do not exclude the possibility that there may be a direct link between certain adjacent aromatic rings, e.g. biphenyl, preferably adjacent rings are linked by one or more atoms (which may be hetero-atoms), more preferably by one atom having one or more heteroatoms dependent therefrom, eg $-SO_2-$

By arylether polymer we mean a polymer having aromatic rings linked to both neighbouring rings in its

chain through -0- wherein the neighbouring rings are part of repeating units Ph-X-Ph where Ph is paraphenylene and X is $S0_2$ and/or C0 and/or a direct link. At least a plurality of the aromatic rings is bonded in the polymer chain by two ether linkages. It will be appreciated that the groups bonding the aromatic rings into the polymer backbone are chemically stable, e.g. not hydrolysable, under the conditions at which the membrane is to be used, e.g $-S0_2-$ or -CO-.

Polymers which are useful for forming the backbone of polymers of which the anion exchange membrane of the present invention is comprised are more fully decribed in the following patent specifications. The disclosures in which are incorporated herein by way of reference.

Our EP-A-0 008894 describes a hydrophilic sulphonated polymer derived by controllably sulphonating a polymer having repeat units of General Formula

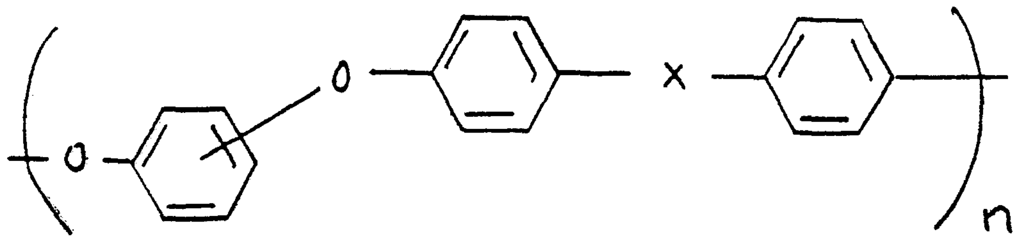

II

wherein X is $S0_2$ and General Formula

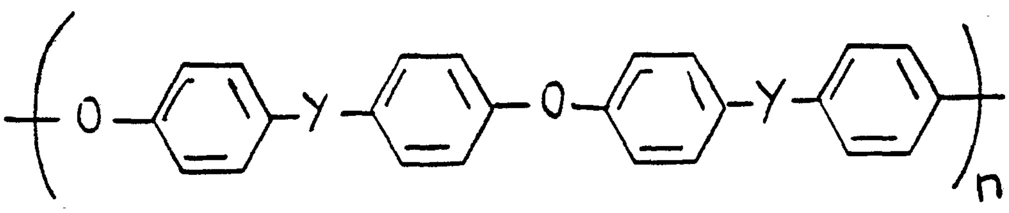

III

wherein Y is $S0_2$, and wherein substantially all units II being sulphonated and substantially all units III unsulphonated.

Our EP-A-0,008,895 and EP-A-0,041,780 describe further arylether polymers having the repeat units of the General Formulae II and III wherein X is CO and wherein both X and Y are C0, respectively. In each of such polymers the aromatic rings in sub-units

IV 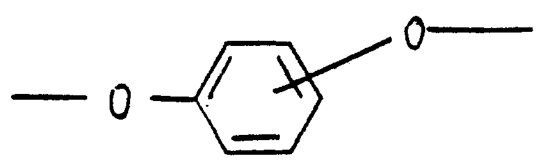

normally undergo monosulphonation if the ether linkages are mutually ortho or para, disulphonation if the ether linkages are mutually meta. A range of sulphonated polymers having differing sulphonate contents can be made by choosing the relative proportions of units II and III in the polymer subjected to sulphonation. When X is C0, sulphonation takes place more slowly and can be conveniently controlled in conventional ways, such as by time and temperature.

GB-A-2090843 describes an arylethersulphone copolymer having nuclear substituents $S0_2X$ (where X is inter alia halogen or NHR, R being H or aryl) on units II as above in which X and Y are both $S0_2$

The polyarylether of which the membrane of the present invention is comprised contains units II, and the said sub-units IV therein can carry one or two substituent according to the mutual disposition of the ether linkages. The polyarylether may contain units III. Linkage X, which in different repeating units of General Formula II may be the same or different, is $S0_2$ or C0.

The molar proportion of units II is suitably in the range 1 to 100%, preferably 50 to 100%, and more preferably 75-100%. Conveniently the balance of the polymer is units III as hereinbefore defined: and linkages Y can be all $S0_2$ or all C0 or partly $-S0_2-$ and partly -C0-. Where III is present, the percentage

thereof in the polymer backbone can be readily determined by the skilled man for example using $^{13}C$ NMR spectroscopy. Whereas we do not exclude the possibility that the polyarylether may contain units other than II and III preferably II and III provide the major portion, more preferably at least 90% and more particularly preferably all the units of the polyaryl ether.

The polyarylether bearing substituent I can be made by reacting a suitable corresponding sulphonic acid derivative with an appropriate diamine as is more fully described in our European patent specification No 0,331,298A. Conveniently, the derivative is an acid halide which may be prepared as described in our aforesaid UK 2090843 or preferably as hereinafter described.The reaction is carried out preferably in a solvent, which is preferably polar, but effectively inert, for example an aromatic nitro compound, suitably nitrobenzene. A basic compound can be present to take up hydrogen halide where the sulphonic acid derivative is a halide. The basic compound is conveniently an excess of the reactant amine or is a tertiary amine or a suitable inorganic reagent.

The aforementioned diamine is suitably tertiary or quaternary at one end of its molecule and primary or secondary at the other end, so that crosslinking of polymer molecules does not readily take place. More specific examples of diamines are alpha-amino-omega-dialkylamino-alkanes, wherein the alkane has 2-6 carbon atoms and is straight or (where possible) branched, and the alkyl groups have 2-4 carbon atoms which are straight or (where possible) branched and may carry an OH or alkoxy group. As examples thereof may be mentioned inter alia:
2-dimethylamino-1-aminoethane, hydrazine, semicarbarbazide, guanidine, biguanide, dialkylaminoanilines, eg 4-dimethylaminoaniline, aminopyridines or aminopyrimidines.

If the amine reactant is not already quaternary on one of its nitrogen atoms, the polymer sulphonamide may be quarternised by reaction with an alkyl halide or an alkyl ester of a strong acid, for example dimethyl sulphate. This step can be applied to the reaction product of sulphonyl halide and amine without isolating the polymer sulphonamide. In an alternative route to the substituted polyaryl ether, the corresponding sulphonic acid or derivative is reacted with a monoamine carrying a reactive group such as halogen or suitable hydroxy derivative. The resulting product may be quaternised with a tertiary amine for example trimethylamine or pyridine.

Polymer sulphonyl halide can be made by reacting the corresponding sulphonic acid or a salt thereof with an inorganic acid halide. Conveniently a thionyl halide, especially chloride is used. An organic base, for example pyridine or dimethylformamide (DMF), may be present. Preferably the thionyl halide, used in excess, is itself the solvent, particularly when the starting material is the free acid; preferably a tertiary amino compound is present, for example 60 to 20 mole % of a pyridine or an amide, especially a lower dialkylamide containing up to 6 carbon atoms, for example dimethylformamide or dimethylacetamide. The resulting polymer sulphonyl halide is recovered by washing the raw product with a liquid in which the unwanted materials are soluble but the polymer is substantially insoluble. This can be cold water but, to reduce the tendency to hydrolysis, is preferably a water-free liquid, as described in our aforementioned EP-A-0,331,298 in which it is especially taught to carry out the washing with vigorous agitation, to ensure removal of organic base from the sulphonyl halide. If the polymer sulphonyl halide is made by this method, its content of halide can be over 75%, especially over 90%, for example over 99% and substantially 100%, by moles of the total of sulphonyl halide and sulphonic acid. Corresponding percentages are obtained of the amide substituted polyarylethers. These constitute preferred polymers for use in the invention in view of their high cation content.

The weight average molecular weight of the polyarylethersulphonamide, expressed in terms of the corresponding parent polymer before introduction of the sulphonamide groups, can be for example from about 2000 up to the limit indicated by viscosity too high to permit ready handling. For the above-mentioned polyarylether-sulphones and ketones is typically in the range 5000 to 10000, especially 25000 to 60000. These molecular weights correspond to reduced viscosities (RV) (1g polymer per 100 $cm^3$ of solution, typically DMF solution) in the range 0.25 to 2.0, especially 0.5 to 1.5 for parent polymer. The RV of a functionalised polymer according to the invention is typically greater than that of its parent in the range of 0.5 to 4.0. The molecular weight can be expressed alternatively as a polymerisation number, typically over 5 and in the range range 12 to 250, especially 60-150. The ion exchange capacity of the polyarylether sulphonamide is often in the range of 0.2 to 4 equivalents per kilogramme, more often 0.4 to 2.

The substituted polyarylether is soluble in organic liquids, particularly polar aprotic solvents, such as dimethyl sulphoxide (DMSO) and DMF and mixtures thereof and can be fabricated into membranes by solvent casting therefrom.

According to a second aspect of the present invention there is provided an electrodialysis system comprising a plurality of anion exchange membranes alternating with, opposed to, and in working relationship with a plurality of cation exchange membranes as hereinafter defined arranged in cell pairs and

provided with means to charge a weak solution to and discharge a concentrated solution from alternating pairs characterised in that the anion exchange membrane is an anion exchange membrane as defined in the first aspect of the present invention

By "cation exchange membrane" we mean a membrane comprising a thin film of polymer which bears negative charges, typically derived from sulphonic or carboxylic acid groups, and which selectively transports cations therethrough in preference to anions, as the result of the passage of an electric current.

In an electrodialysis system according to the second aspect of the present invention, whereas we do not exclude the possibility that the cation exchange membrane is a conventional one, it is often preferred that it is derived from a polyarylether polymer similar to that used for the anion exchange membrane.

Preferably the anion exchange membrane of the first aspect of the present invention is self-supporting but we do not exclude the possibility that it may be supported on a suitable support, e.g. laminated onto or impregnated with a suitable material.

Typically the membrane of the first aspect of the present invention is in the form of a dense continuous film of thickness between 10 and 1000 µm.

According to a third aspect of the present invention there is provided a method for electrodialysis wherein the system used therein is the system defined in the second aspect of the present invention.

The anion exchange membrane of the first aspect of the present invention is typically prepared by casting it from a solution of the appropriate polymer in a suitable solvent, e.g. DMF, at about 20-50% concentration, and then evaporating the solvent such that a thin film is left. We do not exclude the possibility that fibre reinforcement may be incorporated during the casting step although this is not essential. The skilled man will appreciate that there are alternative methods for preparing the membrane, e.g. melt casting.

We do not exclude the possibility that the anion exchange membrane of the first aspect of the present invention may be incorporated into a so-called "bipolar membrane" by conventional techniques, e.g. lamination, co-extrusion or coating.

The present invent is further illustrated by reference to the drawing appended hereto which shows, by way of example only, an arrangement of membranes and feed systems suitable for current efficiency measurements.

Figure 1 is a schematic representation of such a system. In Figure 1, a system is provided with an anode (1), a cathode (2), means for charging an electrode rinse stream (3), means for charging a concentrating stream (4) and means for charging a diluting stream (5). In the system an anion exchange membrane (6), prepared as described hereinafter in Examples 1 and 2, is disposed between two commercially available cation exchange membranes (7) (Neosepta CL 25T). The operating conditions, eg applied voltage, pressure and flux, are readily determined by the skilled man.

The invention is further illustrated by the following Examples which illustrate by way of example only certain aspects of the present invention.

## Example 1

This Example illustrates the preparation of a polyaryl ether homo-polymer bearing sulphonamide groups useful in the preparation of an anion-exchange membrane according to the present invention.

Step A Polyarylether (51.16g) consisting of unit II with para-linked sub-units IV, each sub-unit carrying an $SO_3H$ group, as produced by sulphonation of polymer of RV 0.5, was added to a stirred mixture of thionyl chloride (420g) and DMF (8 ml), at 50 °C and stirred until the polymer dissolved (about 4 hours).The resulting clear yellow brown solution was held at 50 °C for 5 h, then filtered into 1500 ml of ice-cold isopropanol. The resulting precipitate was collected on a filter, rinsed twice with isopropanol, then twice with 60-80 °C petroleum ether and 3 times with 40-60 °C petroleum ether. It was then sucked dry and dried overnight in vacuo at 85 °C. From the analysis of the amide described below it was evident that the sulphonyl chloride content was > 95% of the maximum possible content thereof. The polymer sulphonyl chloride was readily soluble in tetrachloroethane.

Step B In a flow of nitrogen a sample of the polyarylether sulphone sulphonyl chloride (52.27g) was added to dry nitrobenzene (335 ml) and the mixture was stirred and heated to 50 °C until substantially all the solid had dissolved. The solution was filtered to remove any traces of undissolved polyarylether sulphonyl chloride, then fed over 20 minutes into a solution of 1-amino-3-dimethylaminopropane (70 ml) in DMF (380 ml). The mixture was held at 40 °C for 3h. The resulting mixture was run into 3000 ml of isopropanol. The resulting precipitate was collected on a filter, washed successively with isopropanol, then with dilute sulphuric acid to remove untreated diamine, then converted to free base by slurrying with

aqueous sodium hydroxide and washed with water and isopropanol and dried as in the above Step (A). The polymeric sulphonamide had an RV of 0.7 in DMF. By NMR ($^1$H, $^{13}$C) it appeared to contain about 5% of its sulphonyl groups as acid. (In repeat batches the acid content was less than 1% and, typically, at or below the limit of detection by NMR).

Step C To a sample of polymeric sulphonamide from the above Step B (44.89g) dissolved in DMSO (380 ml) was added a solution of methyl iodide (75 g). The mixture was held at 50 °C for 5h, then run into 1,1,1-trichloroethane. The resulting precipitate was slurried in cold water, then in hot water, then washed 4 times with isopropanol, sucked dry and dried as in the above Step (A). The resulting polymeric quaternary ammonium salt had an RV of 1.75 in DMF.

Step (D) The procedure of Example 1(b) was repeated to the end of the heating at 40 °C for 3h using polymeric sulphonyl chloride containing less than 1.0 mole percent of unconverted sulphonic acid. Then a solution of methyl iodide in DMSO of the same concentration as in 1 (c) but in greater quantity by a factor of 2.34 was added. The mixture was heated and worked up as in 1(c). The product was the same as that of 1(c) except for being coarser-grained and easier to handle. Its RV was 2.27 in DMF.

## Example 2

This Example illustrates the preparation of a polyaryl ether-sulphone sulphonamide which may be used in the formation of anion-exchange membranes according to the present invention.

(a) Polyarylether (120g) comprising units II and III in the molar ratio 57:43 each with para-linked sub-units each ring IV of sub-unit II carrying one $SO_3H$ group, as produced by sulphonation of polymer having a RV of 0.51 was added to a stirred mixture of thionyl chloride (1210 ml) and DMF (24 ml) at 50 °C and stirred until the polymer dissolved and then overnight. The product was added with vigorous stirring to 5 times its volume of isopropanol at 5-10 °C. The resulting precipitate was collected on a filter, washed twice with isopropanol, twice re-slurried with 60-80° petroleum ether, twice filter-washed with 40-60° petroleum ether, then dried in vacuo at 60 °C overnight then at 90 °C for 0.75 hr. The yield of product soluble in tetrachloroethane was 93%.

(b) A sample of the polyarylether sulphone sulphonyl chloride so formed (100g) was added to nitrobenzene (645 ml) at 50 °C and stirred until dissolved (30 min). The solution was filtered and under nitrogen added to a solution of 1-amino-3-dimethylaminopropane (164 ml) in DMF (715 ml) with cooling to keep the temperature at about 20 °C. The mixture was stirred for 2.5h before the solution was run into isopropanol and the precipitated product was collected by filtration. Successive washing and filtration with fresh portions of isopropanol was followed by washing with dilute sulphuric acid (2 l) to remove unreacted amine. The product was then washed with dilute sodium hydroxide solution (2 l), demineralised water (1 l) and finally isopropanol (1 l). After filtration, the polymer was dried in a vacuum oven at 80 °C overnight. The yield of polymeric sulphonamide was 94g (84%).

(c) A portion of the polymer (29.3g) was dissolved in demthylsulphoxide (240 ml) and a solution of methyl iodide (19.9g) in dimethyl sulphoxide (70 ml) was added via a dropping funnel. The solution was heated at 50 °C for 3 hours, cooled and dripped into 1,1,1-trichloroethane with stirring to precipitate the polymeric quaternary ammonium salt. The precipitate was filtered, slurried with 1,1,1-trichloroethane and filtered twice, then washed with cold water, hot water and isopropanol before being dried in a vacuum oven overnight at 80 °C. The resulting polymer had an RV of 1.02 in DMF (1g of polymer in 100 ml DMF).

## Example 3

This Example illustrates a further procedure, namely quaternisation without isolation of the intermediate sulphonamide, for the preparation of a further copolymer.

(a) Polyarylether (50.02g) consisting of units II and III in the molar ration 57: 43 each with para-linked sub-units, each sub-unit IV carrying one $SO_3H$ group, as produced by sulphonation of polymer having an RV of 0.51, was added to a stirred mixture of thionyl chloride (712g) and DMF (8 ml) at 50 °C and stirred until the polymer dissolved and then overnight. The product was added with vigorous stirring to 5 times its volume of isopropanol at 5-10 °C. The resulting precipitate was collected on a filter, washed twice with isopropanol, twice re-slurried with 60-80° petroleum ether, twice filter-washed with 40-60° petroleum ether, then dried in vacuo at 85 °C. The yield of product soluble in tetrachloroethane was 86%.

(b) A sample of the polarylether sulphone sulphonyl chloride so formed (13.7g) was added to nitrobenzene (140g) at 50 °C and stirred until dissolved (30 min). The solution was filtered and under

nitrogen added to a solution of 1-methylamino-2-dimethylaminoethane (3.69g) in DMF (100 ml) with cooling to keep the temperature at about 20°C. The mixture was stirred for 2.5h. To it was added a solution of methyl iodide (50.1g) in dimethylsulphoxide (60 ml). The resulting mixture was stirred at 50°C for 5h, then at ambient temperature overnight. The product was dripped into 1,1,1-trichloroethane with stirring to precipitate the polymeric quaternary ammonium salt. The precipitate was collected on a filter, twice reslurried in 1,1,1,-trichloroethane, collected again on a filter, then washed with cold water, hot water and isopropanol, and finally dried overnight at 80°C in vacuo. The polymer had an RV of 0.94 in DMF (1g in 100 ml).

Examples 4-6

These Examples illustrate the preparation and evaluation of anion exchange membranes prepared from the polymers prepared in Examples 1-3.

Dense film membranes were prepared from each of the polymers prepared in Examples 1-3 by the following general method. The polymer was dissolved in DMF to form a 30 wt% solution which was passed through a 50 micron filter and centrifuged for 30 minutes at 3000 rpm. A bead of the solution was poured onto a clean dry glass plate and spread to a thickness of 250 micron using a knife blade. The film was dried in an oven at 50°C and its thickness was measured.

Membrane Evaluation

The electrical resistance of each of the membranes prepared above was measured in 0.5M sodium chloride solution at 25°C using a Wayne Kerr Autobalance Bridge (Model B642). A cell comprising two graphite electrodes separated by the test membrane (effective area 9.62 $cm^2$) was used. The membrane resistance was taken to be the difference in the resistance of the cell with and without the test membrane being in place. The specific resistance of the membrane was calculated by dividing the membrane's areal resistance by its thickness. The values obtained for the three membranes are recorded in Table 1.

The water content of each of the membranes prepared above was measured on films after equilibrating in 0.5M sodium chloride solution at 25°C by Karl Fischer titration of small samples (ca 10mg) using a Mettler DL18 Autotitrator. The values obtained are recorded in Table 1.

The current efficiency of the membrane prepared from the polymer of Example 1 was measured using a laboratory scale electrodialysis cell having a membrane area of 70 $cm^2$ and having the configuration of cation and anion exchange membranes and feeds as depicted in Figure 1. A commercially available Neosepta CL25T membrane was used as the cation exchange membrane. A constant current of 20 mA $cm^{-2}$ was passed and the current efficiency of the membrane for the transport of chloride anions from a 1.0M KCl solution was found to be 95%. The current efficiencies for the transport of chloride and sulphate anions from a solution comprising 0.5M KCl and 0.5M $K_2SO_4$ were found to be 79% and 8% respectively. The current efficiencies are recorded in Table 1.

TABLE 1

| Property | Example 4 | Example 5 | Example 6 |
| --- | --- | --- | --- |
| | Polymer from Ex1 | Polymer from Ex2 | Polymer from Ex |
| Membrane Thickness (cm) | 0.0065 | 0.0037 | 0.0034 |
| Areal Resistance (ohm $cm^2$) | 0.6 | 3.3 | 119 |
| Spcific Resistance (ohm cm) | 92 | 892 | 35000 |
| Water Content (%) | 23 | 14 | 9 |
| Current Efficiency (%) | | | |
| $Cl^-$(1.0M KCl) | 95 | nd | nd |
| $Cl^-$(0.5M KCl/0.5M $K_2SO_4$) | 79 | nd | nd |
| $SO_4^{2-}$(0.5M KCl/0.5M $K_2SO_4$) | 8 | nd | nd |
| Calculated Ion Exchange Capacity (equivalents/kg) | 1.86 | 1.13 | 1.13 |
| n.d: Not determined | | | |

The stability of membranes prepared from the polymer of Example 1 towards 1N HCl, 1N NaOH and 1% potassium dichromate solutions were determined by measuring the specific electrical resistance of the membrane after exposure to each reagent for extensive periods of time at ambient temperatures. The results are shown in Table 2.

TABLE 2

| Reagent | Specific resistance (ohm.cm) | |
| --- | --- | --- |
| | 0 days | 204 days |
| N HCl | 201 | 172 |
| N NaOH | 229 | 216 |
| 1% $K_2Cr_2O_7$ | 225 | 210 |

## Claims

1. An anion-exchange membrane comprising an aryl ether polymer at least a portion of which aryl rings bear a cationic substituent of General Formula $-SO_2N(R^1)-G-\overset{+}{R}R^2_3$
wherein $R_1$ is hydrogen, hydrocarbyl or $-G\overset{+}{N}R^2_3$;
$R^2$, each of which may be the same as or different from each other, is hydrogen or hydrocarbyl; and
G is a direct link, alkylene or a chain of carbon atoms which may contain one or more in-chain oxygen atoms;
wherein an anionic group is associated with the cationic substituent;
wherein at least a plurality of aromatic rings are linked to both neighbouring rings in the polymer chain through $-O-$; and
wherein said neighbouring rings are part of repeating units $Ph-X-Ph$ wherein Ph is paraphenylene and X,which in different repeating units $Ph-X-Ph$ may be the same or different, is $So_2$ or CO or a direct link.

2. A anion-exchange membrane as claimed in Claim 1 wherein in the cationic substituent, $R^1$ is hydrogen or a hydrophilic substituent.

3. An anion-exchange membrane as claimed in Claim 1 wherein in the cationic substituent, $R^2$ is a lower alkyl group containing up to 5 carbon atoms.

4. An anion-exchange membrane as claimed in Claim 1 wherein the aryl ether polymer comprises repeating units

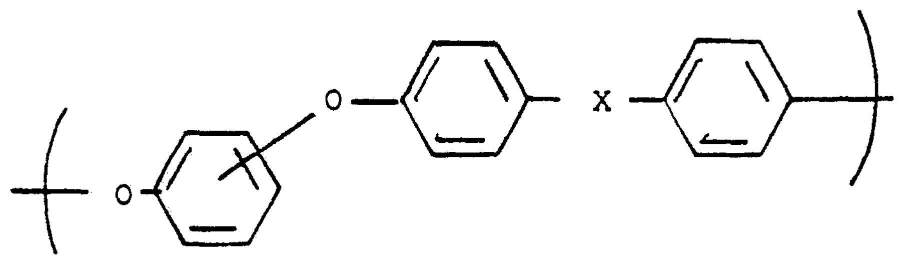

II

wherein X is $SO_2$ or CO
and repeating units

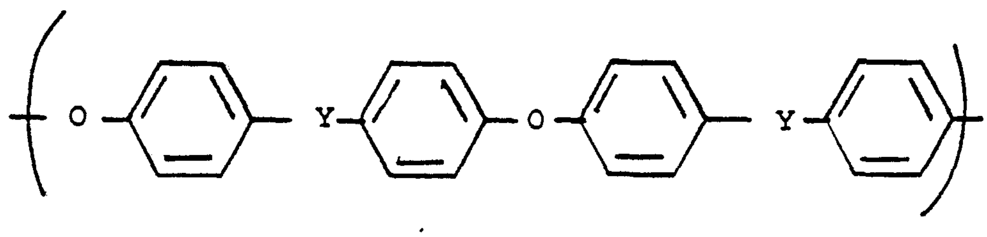

III

wherein Y is $SO_2$ or CO
and wherein substantially all the residues

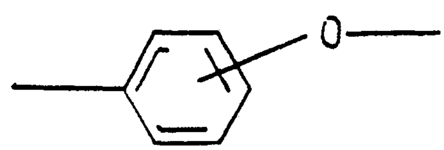

bear a sulphonic acid derivative as defined in Claim 1.

5. An anion-exchange membrane as claimed in Claim 4 wherein the repeating units II and III provide the major proportion of the repeating units in the polymer chain.

6. An anion-exchange membrane as claimed in Claim 5 wherein repeating units II provide between 30% and 80% of the repeating units in the polymer chain.

7. An anion-exchange membrane as claimed in Claim 1 which is self-supporting.

8. An electrodialysis system comprising a plurality of cation-exchange membranes alternating with, opposed to and in working relationship with a plurality of anion exchange membranes, means to charge a weak solution to and means to discharge a concentrated solution from, alternating pairs of membranes characterised in that the anion-exchange membrane is an anion- exchange membrane as claimed in Claim 1.

9. An electrodialysis system as claimed in Claim 8 wherein the cation-exchange membrane is derived from the same polymer backbone as the anion exchange membrane.

10. A method for electrodialysis wherein a system as claimed in Claim 8 is used.

11. A method for the preparation of an anion-exchange membrane as claimed in Claim 1 comprising the step of casting a polymer.

Fig. 1

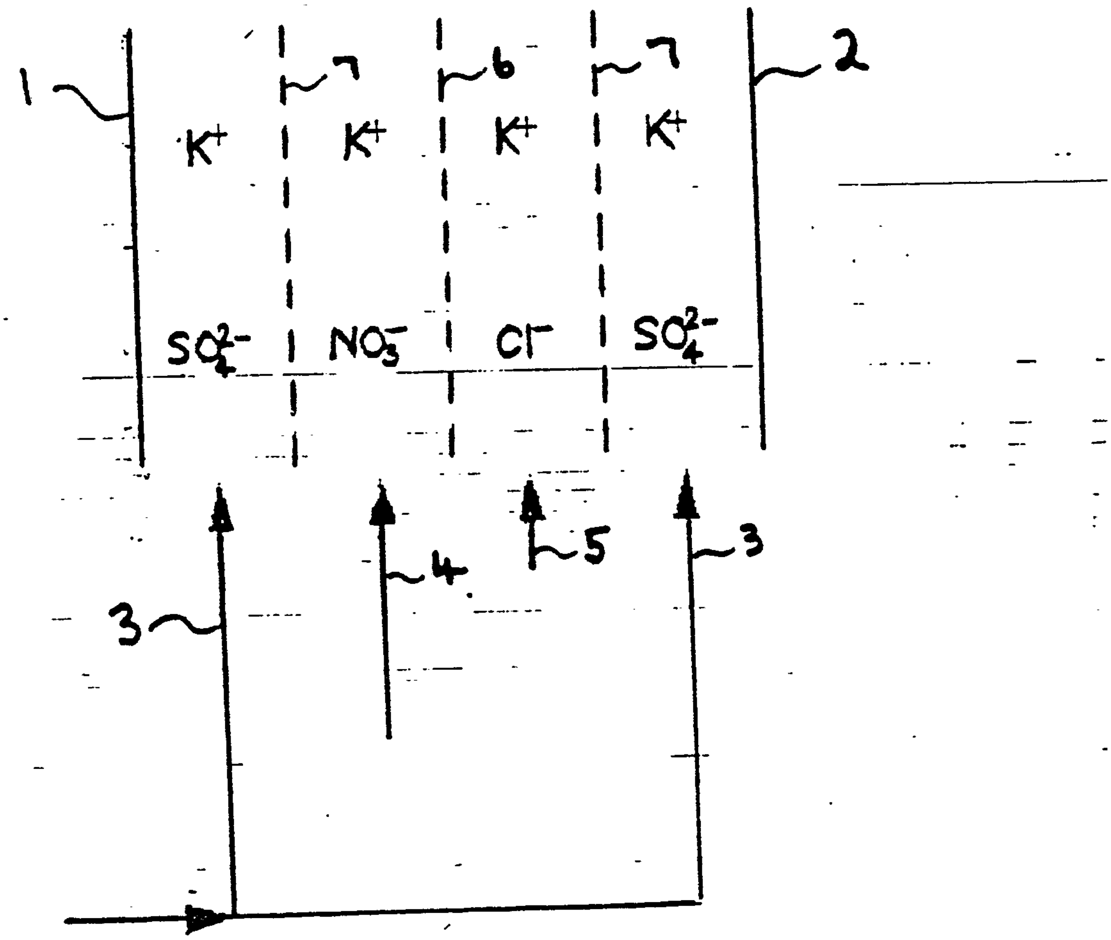

European Patent Office

# EUROPEAN SEARCH REPORT

Application Number

EP 90 30 1160

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,P D | EP-A-0 331 298 (IMPERIAL CHEMICAL INDUSTRIES) * Page 2; page 3, lines 1-45 * | 1-6 | C 08 J 5/22<br>B 01 D 61/44 |
| A | DE-A-3 152 879 (FORSCHUNGSINSTITUT BERGHOF) * Page 4, lines 4-24; page 7, lines 1-18 * | 1-8,11 | |
| A,D | EP-A-0 008 894 (IMPERIAL CHEMICAL INDUSTRIES) * Page 2, line 27 - page 3, line 14 * | 1-6 | |

TECHNICAL FIELDS SEARCHED (Int. Cl.5)

B 01 D
C 08 J

The present search report has been drawn up for all claims

| Place of search | Date of completion of the search | Examiner |
|---|---|---|
| THE HAGUE | 17-04-1990 | GONZALEZ ARIAS M.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)